(19) Europäisches Patentamt

European Patent Office

Office européen des brevets

(11) **EP 1 171 297 B1**

(12) **EUROPEAN PATENT SPECIFICATION**

(45) Date of publication and mention
of the grant of the patent:
**09.02.2005 Bulletin 2005/06**

(51) Int Cl.7: **B32B 27/32**, C08J 5/18,
C08L 23/10

(21) Application number: **99935972.2**

(22) Date of filing: **28.07.1999**

(86) International application number:
**PCT/US1999/017032**

(87) International publication number:
**WO 2000/012306 (09.03.2000 Gazette 2000/10)**

(54) **HIGH OTR POLYOLEFIN FILMS**

POLYOLEFINFOLIE MIT GROSSER SAUERSTOFFDURCHLÄSSIGKEIT

FILMS DE POLYOLEFINE A TAUX DE TRANSMISSION D'OXYGENE ELEVE

(84) Designated Contracting States:
**AT BE CH CY DE DK ES FI FR GB GR IE IT LI LU MC NL PT SE**

(30) Priority: **27.08.1998 US 141291
21.01.1999 US 234745**

(43) Date of publication of application:
**16.01.2002 Bulletin 2002/03**

(73) Proprietor: **APPLIED EXTRUSION
TECHNOLOGIES, INC.
New Castle, Delaware 19720 (US)**

(72) Inventor: **DEMEUSE, Mark, T.
Hockessin, DE 19707 (US)**

(74) Representative: **Shaw, Laurence
Laurence Shaw & Associates,
5th Floor Metropolitan House,
1 Hagley Road
Edgbaston, Birmingham B16 8TG (GB)**

(56) References cited:
**EP-A- 0 243 965          EP-A- 0 763 422
WO-A-95/26269          WO-A-98/20062
WO-A-99/51665          US-A- 5 322 726**

- **DATABASE WPI Section Ch, Week 199824
Derwent Publications Ltd., London, GB; Class
A17, AN 1998-266013 XP002119547 & JP 10
086297 A (IDEMITSU PETROCHEM CO LTD), 7
April 1998 (1998-04-07)**
- **DATABASE WPI Section Ch, Week 199804
Derwent Publications Ltd., London, GB; Class
A17, AN 1998-036866 XP002119548 & JP 09
290865 A (GUNZE KK), 11 November 1997
(1997-11-11)**
- **DATABASE WPI Section Ch, Week 199527
Derwent Publications Ltd., London, GB; Class
A17, AN 1995-203462 XP002119549 & JP 07
117193 A (TORAY IND INC), 9 May 1995
(1995-05-09)**
- **PATENT ABSTRACTS OF JAPAN vol. 1997, no.
07, 31 July 1997 (1997-07-31) & JP 09 084517 A
(DAINIPPON PRINTING CO LTD), 31 March 1997
(1997-03-31)**
- **DATABASE WPI Section Ch, Week 199935
Derwent Publications Ltd., London, GB; Class
A17, AN 1999-412417 XP002119550 & JP 11
165389 A (TOKUYAMA SODA KK), 22 June 1999
(1999-06-22)**

EP 1 171 297 B1

**Description**

This invention relates to polyolefin films having certain unique properties. Specifically, it relates to clear polyolefin films that exhibit an increased oxygen transmission property as compared to conventional polypropylene films known to the art.

It is known that, for many applications, particularly packaging applications, polypropylene is less than totally satisfactory due to a relatively high permeability to oxygen. A great amount of effort has been expended in recent years to decrease the oxygen transmission characteristics of polypropylene. The best results to date have been obtained by metallization of the films.

There are, however, some applications in which a greater and controllable oxygen transmission rate is desired. This is particularly the case when fresh fruits, vegetables and flowers are to be packaged as these products continue to respire after they are packaged. Absence or insufficient levels of oxygen, which occurs as the oxygen originally present in the package is consumed, leads to premature senescence and spoilage of the products. At the same time, respiration leads to a build-up of moisture in the package, which can also lead to spoilage of the product if the moisture cannot escape from the package.

For many fresh vegetables, fruits and flowers, conventional polypropylene films, whether monolayer or multilayer, of a thickness sufficient to be self-supporting, have oxygen and moisture vapor permeability values that are not sufficient to allow the optimum oxygen and moisture levels to be maintained in a sealed package. It is thus desirable to provide packaging films wherein the oxygen content can be replenished as necessary and from which moisture and carbon dioxide can escape.

It is known to prepare microporous films based on an opaque polymer mixture comprised of about 45% to 55% homopolypropylene and 55% to 45% of a copolymer of propylene and ethylene containing about 2% to 5% ethylene by weight, with film have greater oxygen permeability than films made of plain polypropylene. This polymer mixture is blended into a mixture comprised of about 40 to 60% of the polymer mixture and 60 to 40% of certain inorganic filler materials and is subjected to biaxial orientation. The filler material selected is one that causes voiding of the polymer matrix during the drawing operation. Exemplary of such voiding pigments are barium sulfate, calcium carbonate, silica, diatomaceous earth and titania. Calcium carbonate is said to be the preferred filler material. Anderson, U.S. Patent 4,842,875, teaches the use of such films in the preparation of controlled atmosphere containers for use with fresh vegetables, fruits and flowers.

Microporous films known to the art as described above function reasonably well for preparing films having increased and, to a degree, controllable oxygen and moisture vapor permeability. However, the voiding pigments employed in the prior art are of a particle size large enough and are employed in concentrations great enough to result in formation of voids of such a size that the resultant films are almost totally opaque.

It is also known to prepare high OTR polyolefin films for some applications by laminating a polyethylene film of about 25.4 μm (one mil) thickness to a polypropylene film of about 10.2 to 17.7μm (0.4 to 0.5 mil) thickness. The polypropylene film acts as a stiffener to give the polyethylene sufficient stiffness that it can be used as a produce wrapper. The polyethylene, which has an inherently high OTR, then acts as a high OTR sealant layer.

It is an object of this invention to provide transparent, high modulus polyolefin films based on polypropylene having, among other useful properties, increased oxygen and moisture vapor properties.

It is a further object of the invention to provide polyolefin films based on propylene that are useful in modified atmosphere packaging applications for packaging fresh vegetables, fruits and flowers.

It is yet another object of this invention to provide novel polyolefin films for use for packaging wherein a high modulus film is desired.

In accordance with this invention, there are provided transparent biaxially oriented polyolefin films employing olefin heteropolymers and high modulus polypropylene, which films have a stiffness (i.e. tensile modulus) sufficient to have self-supporting, stand-alone characteristics such that they can be employed as packaging films. These films have increased oxygen and moisture vapor permeability, as compared with conventional, unmodified polypropylene film, and are substantially clearer than are films possessing these permeability characteristics that have heretofore been known to the art.

Accordingly, the invention provides a transparent biaxially oriented polyolefin film comprising a core layer carrying a skin layer on one or both of its surfaces, said core layer comprising a polyolefin blend which comprises from 25 to 90% by weight of an ethylene/propylene copolymer having between 4.5 and 6% by weight ethylene and from 75 to 10% by weight of a high modulus polypropylene such that, when formed into a 17.78 μm thick (70 gauge), biaxially oriented film drawn 7X by 7X on simultaneous draw equipment has a modulus of at least about 3102.4 MPa (450,000 psi).

In the following discussion, gas permeability properties of the films of the invention will be discussed in terms of their OTR and MVTR. Carbon dioxide transmission rate is also an important parameter of these films affecting their utility as packaging materials for fresh produce items. Carbon dioxide transmission rates can be estimated using the generally accepted factor of a 4 to 1 weight ratio of carbon dioxide to oxygen transmitted per unit of time.

When used in this disclosure, the term "$\alpha$-monoolefin" (sometimes "alphamonoolefins") refers to a linear unsaturated hydrocarbon monomer having one carbon-carbon double bond, which double bond is located at the end of the linear chain. The term is intended to include any such monomer having 6 carbon atoms or less, including ethylene and propylene.

The term "heteropolymer" as used throughout this disclosure means an olefin polymer containing at least two $\alpha$-monoolefins. Typical of such heteropolymers are ethylene--propylene copolymers having about 4.5 to 6% by weight of ethylene, copolymers of ethylene containing about 5 to 25% by weight of other $\alpha$-monoolefins of 4 to about 8 carbon atoms, butene-I--propylene copolymers containing about 5 to 34% by weight of butene-I and ethylene--propylene--butene-1 terpolymers. Such heteropolymers can be converted to films and can be oriented within a temperature range comparable to the temperature range within which polypropylene is satisfactorily drawn to effect orientation.

The term "self supporting" in reference to a film means that the film can support itself without the aid of a supporting layer to provide the necessary strength and body and it can readily be handled without being adhered to another substrate. Such a film may also be referred to as a "stand-alone" film.

The term" transparent", when employed in connection with the films of this invention, is intended to indicate a film having a haze value less than about 5% as measured with a conventional haze measuring instrument such as the BYK Gardner Haze-Gard Plus.)

References to a polypropylene or polypropylene species or composition having a "high modulus" means a polypropylene or a polypropylene composition, a film of which has a modulus greater than that of a conventional propylene homopolymer film of the same thickness drawn to the same draw ratio using the same drawing technique, i.e. bubble or tenter. For example, the modulus of 17.78 $\mu$m thick (a 70 gauge (0.7mil thickness)) film of conventional polypropylene, drawn 7X by 7X on simultaneous draw equipment is on the order of 2757.7 Mpa (400,000 psi). The modulus of a high modulus polypropylene of the same thickness, similarly drawn, is at least about 3102.4 Mpa (450,000 psi).

Heteropolymers such as those described are well known in the polyolefin art and are widely used as heat seal layers on commercial polypropylene composite films. In those applications, the heteropolymers comprise very thin layers on the surface of a relatively thick polypropylene core. The layers thus employed are so thin that, unless they are adhered to a core layer, they cannot be wound into a roll, nor can they be used for any purpose that requires them to be handled except when they are adhered to a supporting substrate, i.e., they are not self supporting. As a general rule, when the heteropolymers are intended to serve as sealing layers, they are applied to the polypropylene core in layers of no more than about 2.54 $\mu$m (0. 1 mil) in thickness, whereas the thicker polypropylene layer is usually about 17.78 to about 20.32 $\mu$m (0.70 to about 0.80 mils).

The heteropolymers are inherently more permeable to oxygen and moisture than is polypropylene *per se*. For example, a one mil layer of a typical biaxially oriented polypropylene exhibits OTR, measured according to ASTM D3985-81, on the order of about 125 to 150 cc/100 sq. in./atmosphere/day and MVTR on the order of about 0.3 to 0.4 g/100 sq.in./day. A 25.4$\mu$m (one mil) layer of a copolymer of propylene containing 6% ethylene exhibits OTR on the order of about 300 to 350 cc/100 sq. in./atmosphere/day and MVTR on the order of about 0.7 to 1.0 g/100 sq. in./day. However, when used as sealing layers, these latter materials are in such thin layers that they have virtually no effect on the OTR and MVTR of a film to which they may be applied since the lower OTR and MVTR of the polypropylene core does not permit all the oxygen and moisture that can pass through the sealant layer to pass through the polypropylene layer.

It has not heretofore been possible, however, to take advantage of the greater permeability properties of the heteropolymers in packaging of fresh produce items since the heteropolymers have not heretofore been shown to be amenable to the production of packaging films. These materials lack the higher degree of stereoregularity characteristic of polypropylene and thus they do not possess sufficient tensile strength and stiffness to form stand-alone films that can be employed as packaging films.

In accordance with this invention, it has been found that, by combining the ethylene/propylene copolymer with a high modulus polypropylene species, a clear, self supporting film can be prepared that has stand-alone properties and a sufficiently high OTR and MVTR required for use in packaging fresh fruits, flowers and vegetables that require a continuous refreshing of the oxygen supply in the closed package.

In accordance with this invention the high modulus polypropylene species is combined with the ethylene/propylene copolymer by blending the ethylene/propylene copolymer with the high modulus polypropylene species within specific blending ratios and thickness limitations to prepare films that have a sufficient tensile modulus to be self-supporting while exhibiting the OTR and MVTR required for use in packaging fresh produce items that continue to respire after they are harvested and packaged for the market. It has been found that films having the desired properties can be prepared from polyolefin blends consisting essentially of about 25 to 90% by weight of the ethylene/propylene copolymer and 75 to 10% by weight of the high modulus polypropylene based on the total weight of the blend. A preferred blend composition is one consisting essentially of about 40 to 90% by weight of the ethylene/propylene copolymer and about 60 to 10% by weight of the high modulus polypropylene.

It is known that OTR is, to a degree, dependent on the thickness of a polyolefin film and increases in almost a straight line relationship to the thickness as the thickness decreases. Thus by decreasing the thickness of a polypropylene layer and increasing that of a heteropolymer layer, a point will be reached at which the OTR of the polypropylene layer will be greater than that of the heteropolymer layer. At this point, based on the observation of the OTR effect of heteropolymer skins on a polypropylene core, one would anticipate that the OTR of the composite would be that of the heteropolymer core.

However, upon examining the results of the OTR testing of the films prepared in carrying out the work that led to certain embodiments of the invention disclosed in this application, it was found that, when a thin polypropylene layer (or layers) is (are) applied to a high OTR core, the OTR of the composite is not the same as would have been expected of the core layer without the polypropylene skin(s). The OTR of the composite is less than that of the core layer alone even though the polypropylene skin layers are so thin as to have an OTR greater than that of the core.. This effect is explainable by the fact that, even though the OTR of the polypropylene skin layers is now greater than that of the heteropolymer core, the difference between the OTR values of the core and the skins is not nearly so great as that between the polypropylene core and the heteropolymer skins of conventional films.

In all composite films according to this invention, the time required for the oxygen to pass through the skin layer becomes a factor with respect to the composite OTR of the film. Since the OTR of a heteropolymer skin on prior art films is so high, the time required for oxygen to pass through is so small that it has a negligible effect on the composite OTR.

Since OTR is a rate, it can be represented by distance (i.e., film thickness) divided by time required for oxygen to pass through the film, i.e.,

$$OTR = thickness/time$$

Accordingly, the time required for oxygen to pass through the film is equal to the thickness divided by the OTR, i.e.,

$$Time = thickness/OTR$$

For a three layer film, the composite OTR is the composite film thickness divided by the sum of the times required for oxygen to pass through the individual layers, *i.e.*

$$Composite\ OTR = Thickness\ /(T_1/OTR_1) + (T_2/OTR_2) + (T_3/OTR_3)$$

Where $T_1$ and $T_3$ represent the thicknesses of the skin layers and $T_2$ represents the thickness of the core layer of the composite while $OTR_1$ and $OTR_3$ represent the OTR values of the corresponding skin layers and $OTR_2$ represents the OTR value of the core layer. Since the OTR and the thickness of the individual layers can be easily measured, it is not necessary to know the absolute time required for the oxygen to pass through each layer.

With the above knowledge, it is now possible to tailor films to have a predetermined OTR for packaging specific items of produce. If one has sufficient information concerning the respiration rate of a product, one can vary the layer thicknesses to approximate that respiration rate sufficiently accurately for successful commercial use. This is true for all composite films within the scope of this invention.

In accordance with this invention, it has been found that a blend of the ethylene/propylene copolymer with a high modulus polypropylene within specific blending ratios and thickness limitations can be employed to prepare films that have a sufficient tensile modulus to be self-supporting while exhibiting the OTR and MVTR required for use in packaging fresh produce items that continue to respire after they are harvested and packaged for the market. It has been found that films having the desired properties can be prepared from polyolefin blends consisting essentially of about 25 to 90% by weight of the ethylene/propylene copolymer and 75 to 10% by weight of the high modulus polypropylene based on the total weight of the blend. A preferred blend composition is one consisting essentially of about 40 to 90% by weight of the ethylene/propylene copolymer and about 60 to 10% by weight of the high modulus polypropylene. In these embodiments of the invention a separate skin layer is required; the high modulus polypropylene being combined with the ethylene/propylene copolymer by being blended therewith.

Films prepared with the blends just described, when cast and drawn to a typical packaging film thickness, i. e. 17.78 - 20.32 µm (0.7 to 0.8 mil), exhibit several properties that make them unique and desirable for the packaging of fresh produce products. First, they are of a stiffness required of packaging materials generally, i.e. a tensile modulus of at least about 1240.9 Mpa (180,00 psi)and most preferably at least about 1275.4 Mpa (185,000 psi)and significantly higher as the high modulus polypropylene content is increased. In addition, such films exhibit an OTR greater than 3.06 $cm^3/cm^2/day/MPa$ (200 cc/100 sq. in./day/atmosphere) a level at which the packaged product can continue to respire for a reasonable time after it has been harvested, thus assuring a reasonable shelf life for the product. Thirdly, the films are found to have a moisture vapor transmission rate (MVTR) greater than that of conventional polypropylene films, whereby they permit the escape of moisture generated by the produce product's continued respiration after it is packaged. Finally, the films retain a high degree of clarity and transparency, so that the packaged product can be inspected for its appearance by the potential purchaser.

In order for the films to have a stiffness sufficient to permit their use as packaging films, a high modulus polypropylene or polypropylene composition, as described above in connection with the previously disclosed embodiments of this invention is employed in the blend.

Film forming and drawing to effect biaxial orientation can be carried out by conventional techniques, i.e. the well known tubular (bubble) process or the equally well known tenter process can be employed. When the films are prepared by the bubble process, the draw is effected simultaneously and uniformly in the machine and cross directions to about 3X to 7X and preferably about 5X to 7X. Using the tenter process, drawing is carried out sequentially to about 3X to 7X in the machine direction and to about 7X to 11 X in the cross direction.

Films according to the embodiments of the invention employing a blend of the ethylene/propylene copolymer and the high modulus polypropylene, and which exhibit the high OTR and MVTR characteristics are composite films wherein the ethylene/propylene copolymer /polypropylene blend is a core layer having a functional skin layer on either or both of its surfaces. Skin layers must have OTR and MVTR greater than that of the core. The films are generally of a thickness from about 12.7 to 25.4 μm (0.5 to 1.0 mil) and preferably from about 12.7 to 20.3μm (0.5 to 0.8 mil).

Functional layers that can be employed as the skin layer include such layers as, e.g,, a heat seal layer. Such a layer will be of a material of lower softening point than the core so that when heat is applied to effect the seal, the orientation of the core layer will not be disturbed. A commonly used heat seal layer is a terpolymer of propylene, ethylene and butene-1, unless, of course, that is the core heteropolymer. Other polymers that can be employed as a heat seal layer include polyvinyl or polyvinylidene chloride.

Another commonly used functional layer is a slip layer to facilitate handling of the film during later converting operations. Such a layer is comprised of a polymer containing a slip agent such as a high molecular weight fatty acid amide. A functional layer may also contain an antiblock additive to facilitate unwinding of the film after it has been wound at the terminus of the film manufacturing process. Preferably, such layers will be made of the same heteropolymer blend as is employed in the core layer. A slip layer can also be comprised of polypropylene since such a layer will be sufficiently thin as to be more oxygen permeable than the core.

The films according to these embodiments of the invention can also be provided with a cold seal coating. Such a coating is typically a rubber adhesive applied to the polymer surface.

The functional skin layer can also be a layer of polypropylene provided that the skin layer must be sufficiently thin that its OTR and its MVTR are greater than those of the blended ethylene/propylene copolymer /high modulus polypropylene core. A polypropylene skin layer can serve several functions when applied to one or both surfaces of the blended ethylene/propylene copolymer/high modulus polypropylene core. The use of polypropylene in slip and antiblock layers has already been mentioned.

Polypropylene skins can also be employed to provide printable surfaces to the films of the invention by subjecting the skins to an oxidative medium according to known methods. A preferred oxidative medium is corona discharge. Another preferred oxidative technique is flame treatment. Another, but less preferred technique is the use of an oxidizing acid. One skilled in the film art can readily determine the degree of oxidative treatment required for a particular application.

Another example of the use of polypropylene as a skin layer is in a case wherein the blended ethylene/propylene copolymer/high modulus polypropylene core is not sufficiently stiff or if its stiffness is marginal. The modulus of such a film can be increased into a more desirable range by application of a polypropylene skin. This layer can be of either a conventional polypropylene or of a high modulus polypropylene species so long as the modulus of the skin layer is greater than that of the blended ethylene/propylene copolymer /high modulus polypropylene core. The high modulus species is preferred for this purpose. The high modulus polypropylene species can be as disclosed below.

Suitable and preferred polypropylenes for use in the skin layer, which exhibit the required high modulus characteristics include the newly developed high crystallinity polypropylene. This material, available under several trade names, is defined as having an isotactic index of at least 93%, i.e., the polymer contains no more than about 7%, and preferably no more than about 2 to 6% xylene soluble materials. Typical high crystallinity polypropylene is further characterized by higher stiffness, greater surface hardness, lower heat deflection at high temperatures, lower heat shrinkage and better creep properties than conventional isotactic polypropylenes, which have isotactic index generally less than 93%. Typical high crystallinity polypropylenes that can be employed include ACCPRO 9117, ACCPRO 9119 and ACCPRO 9218 (all available from Amcoco Polymers, Alpharetta, GA); and also Chisso HF 5010 and Chisso XF 2805 (all available from Chisso Chemical Co. Ltd., Tokyo, Japan.

High modulus polypropylenes also include nucleated polypropylenes. These are conventional isotactic polypropylenes that have been nucleated to increase their crystallinity.

Exemplary commercially available nucleated polypropylenes include Aristech FFO35C (Aristech Chemical Co. Pittsburgh, PA).

High modulus polypropylenes also include blends of conventional Ziegler-Natta isotactic polypropylene with low molecular weight hydrocarbon resins. Inclusion of about 5% or more of the low molecular weight hydrocarbon resin in a conventional polypropylene increases the modulus to the desired high modulus range. The upper limit of low molecular weight resin is about 25% by weight.

The low molecular weight hydrocarbon resins are hydrogenated or unhydrogenated resins derived from olefin monomers, such as the resins derived from terpene monomers, coal tar fractions and petroleum feedstocks. In general, the low molecular weight resins are characterized by a molecular weight less than about 5000, a $T_g$ of about 50 to 100°C and a softening point less than about 140°C. Suitable resins include those prepared from terpene monomers (e.g., limonene, alpha and beta pinene, such as Piccolyte resins from Hercules Incorporated, Wilmington, DE, and Zonatac resins from Arizona Chemical Company, Panama City, FL.). Other low molecular weight resins are prepared from hydrocarbon monomers and mixtures thereof, such as $C_5$ monomers (e.g., piperylene, cyclopentene, cyclopentadiene, and isoprene), oligomerized $C_5$ monomers, particularly the thermally oligomerized $C_5$ monomers such as the hydrogenated thermally oligomerized cyclopentadiene rsins sold under the trade name Escorez (for example Escorez 5300) by Exxon Chemical Co. of Baytown, TX. Others are prepared from $C_9$ monomers, particularly the monomers derived from $C_9$ petroleum fractions which are mixtures of aromatics, including styrene, methyl styrene, alpha methyl styrene, vinyl naphthalene, the indenes and methyl indenes and, additionally, pure aromatic monomers, including styrene, $\alpha$-methyl-styrene and vinyltoluene. Examples of these resins include hydrogenated $\alpha$-methyl slyrene--vinyl toluene resins sold under the trade name Regalrez by Hercules Incorporated of Wilmington, DE. The hydrogenated $C_9$ and pure monomer resins are preferred. Particularly preferred are the hydrogenated cyclopentadiene resins and the hydrogenated aromatic resins derived from pure aromatic monomers, e.g., the hydrogenated a-methyl styrene--vinyltoluene copolymers.

Another polypropylene having the high modulus required of the skin layers of the films of this invention can be prepared by blending conventional commercial isotactic polypropylene prepared via Ziegler-Natta catalysis with a polypropylene prepared by use of a metallocene catalyst. Such blends and films prepared therewith are described in copending and commonly assigned U.S. Patent Application number 09/055389, filed April 6, 1998. In the referenced application, it is shown that very significant increases in tensile modulus are realized when these polymer types are blended. Such modulus improvements are realized with blends containing 10 to 90% of the Ziegler-Natta polymer.

The composite films can be prepared by any conventional method, such as coextrusion, lamination or extrusion coating. All of these techniques are well known in the film art.

Pellets of the desired polypropylene and ethylene/propylene copolymer in the desired ratios were dry mixed and melt blended in a Leistritz twin screw extruder (American Leistritz Extruder Corporation, Somerville, NJ). The blended polymer mass was extruded into a water bath at room temperature to quench it and the quenched strands were chopped into pellets.

## EXAMPLE 1

A series of blends of a high modulus polypropylene (Aristech FF03 SC) and a copolymer of ethylene and propylene containing about 4.5% by weight ethylene (Fina 8573, Fina Chemical Co. Houston, TX) were prepared and pelletized as described in the previous paragraph. All were extruded at 170 RPM and at a temperature between 242 and 244°C.

The blend compositions thus prepared were cast at a temperature of about 246° C onto a casting roll maintained at about 60°C. Extrusion was carried out at about 0.94 to 1.04 m/min (3.1 to 3.4 fpm). A cast film of about 584 μm (23 mil) thickness was recovered.

The cast film, in each case was drawn about 6X by 6X on a T.M.Long Stretcher (T.M. Long Corporation, Somerville, NJ) and heat set 10%. Film orientation conditions are recorded in Table A.

Table A

| Wt% ethylene/propylene copolymer. | Temperature | Preheat |
|---|---|---|
| 0 | 145°C | 35 sec. |
| 10 | 145°C | 35 sec. |
| 25 | 145°C | 35 sec. |

Table A   (continued)

| Wt% ethylene/propylene copolymer. | Temperature | Preheat |
|---|---|---|
| 50 | 145°C | 35sec. |
| 75 | 135°C | 25 sec. |
| 90 | 130°C | 25sec. |
| 100 | 125°C | 25 sec |

The films thus prepared were characterized as to their modulus, measured on an Instron tensile tester, their OTR according to ASTM D-3985-81 and their haze value measured according to ASTM D-1003, using a Gardner Haze Meter. The results of this testing are set forth in Table 1, below.

TABLE 1

| Wt% ethylene/propylene copolymer | Film Guage | Modulus | % Haze | OTR* |
|---|---|---|---|---|
| 0 | 71 | 481400 | 0.59 | 132 |
| 10 | 69 | 435837 | 0.57 | 160.6 |
| 25 | 69 | 396228 | 0.49 | 171.6 |
| 50 | 76 | 306578 | 0.60 | 211.2 |
| 75 | 70 | 241711 | 0.37 | 271.0 |
| 90 | 70 | 202825 | 0.32 | 309.9 |
| 100 | 67 | 173905 | 0.28 | 358.7 |

* Unit is cc/100 sq.in/atmosphere/day

It is readily seen from the data recorded in Table 1 that as the ethylene/propylene copolymer concentration is increased in the range of about 50 to 90 %, the OTR increases to a point at which the film becomes satisfactory for use in modified atmosphere packaging applications and its modulus remains within a useable range.

**EXAMPLE 2**

Following the same procedures as were followed in Example 1, a series of films were prepared using a blend of the same high modulus polypropylene and an ethylene-- propylene copolymer containing about 6% ethylene by weight (Fina Z9470). Orientation conditions for these films are recorded in Table B, below.

Table B

| Wt% Heterop. | Temperature | Preheat |
|---|---|---|
| 0 | 150°C | 35 sec. |
| 10 | 150°C | 35 sec. |
| 25 | 150°C | 35 sec. |
| 50 | 150°C | 35 sec. |
| 75 | 145°C | 30 sec. |
| 90 | 130°C | 20 sec. |
| 100 | 120°C | 20 sec. |

The properties of the films thus prepared are set forth in Table 2, below.

TABLE 2

| Wt% heterop. | Film Gauge | Modulus | % Haze | OTR* | MVTR ∗ |
|---|---|---|---|---|---|
| 0 | 57 | 487,805 psi | 0.67 | 179.6 | 0.401 |
| 10 | 60 | 462,067 psi | 0.64 | 189.2 | 0.569 |
| 25 | 59 | 363,416 psi | 0.79 | 215.6 | 0.696 |
| 50 | 69 | 264,570 psi | 1.36 | 276.9 | 0.618 |
| 75 | 66 | 180,002 psi | 1.27 | 364.4 | 0.813 |
| 90 | 60 | 136,300 psi | 0.64 | 466.5 | 1.372 |
| 100 | 59 | 120,602 psi | 0.75 | 473.7 | 1.561 |

* Unit is cc/100 sq. In./atmosphere/day
** Unit is gms/100 sq. In/day

Here again, it is readily seen that a ethylene/propylene copolymer content from about 25 to 75 % provides a film having a satisfactory modulus and both OTR and MVTR suitable for use in modified atmosphere packaging.

## EXAMPLE 3

Another series of films were prepared as described in Example 1, employing, as the high modulus polypropylene species, Accpro 9117 from Amoco Polymers and the 6% ethylene copolymer employed in Example 2.
The polymer and the heteropolymer were pelletized as previously described, using substantially the same processing conditions. The blend compositions were cast at about 0.94 to 0.98 m/min (3.1 to 3.2 fpm) and a temperature of about 245°C onto a casting roll maintained at about 60 °C. A cast film of about 584.2 μm (23 mil) thickness was recovered. The cast film, in each case, was drawn about 6X by 6X on the T.M. Long stretcher. Film orientation conditions are recorded in Table C.

Table C

| Wt % ethylene/propylene copolymer | Temperature | Preheat |
|---|---|---|
| 0 | 150°C | 40sec. |
| 25 | 150°C | 30sec. |
| 50 | 150°C | 25 sec. |
| 75 | 140°C | 20 sec. |
| 100 | 125°C | 20sec. |

The resulting films were characterized as to their modulus, their OTR and their Haze value with the results recorded in Table 3 below.

TABLE 3

| Wt% ethylene/propylene copolymer | Film gauge | Modulus | % Haze | OTR |
|---|---|---|---|---|
| 0 | 58 | 517,637 | 0.55 | 179.9 |
| 25 | 70 | 362,435 | 0.48 | 205.7 |
| 50 | 64 | 286,409 | 0.66 | 297.6 |
| 75 | 61 | 184,078 | 0.77 | 442.4 |
| 100 | 51 | 102,424 | 2.94 | 679.0 |

Here again, it is readily seen that a ethylene/propylene copolymer content in the blends from about 25 to 75% provides a film suitable for use in modified atmosphere packaging.

## EXAMPLE 4

In this example, two composite film structures were prepared consisting, in one case, (sample 4a), of a core layer comprised of a 50/50 blend of a high modulus polypropylene (Aristech FFO35C) and a 4.5% ethylene copolymer with propylene (Fina 8573).having a skin layer of the same polypropylene on both of its surfaces. In the other case (Sample 4b), the skin layers were the same polypropylene on one surface and the 4.5% ethylene copolymer on the other surface. A control (Sample 4c), was also prepared having no surface layers.

These films were all cast onto a 103°C casting roll at about 0.94 m/min (3.1 fpm) then drawn 6X by 6X at about 130°C.

Property data for these films are recorded in Table 4, below.

TABLE 4

| Sample No. | Gauge | Modulus | %Haze | OTR |
|---|---|---|---|---|
| 4a | 66 | 363,856 | 0.47 | 176.1 |
| 4b | 60 | 298,909 | 2.08 | 235.1 |
| 4c | 64 | 302,801 | 0.54 | 236.8 |

It is readily seen from Example 4 that the addition of a polypropylene skin or skins is an effective way to decrease or otherwise control the oxygen permeability of the film. Sample No. 4a provides the maximum reduction of the OTR for a case in which the product requires a lower oxygen permeability than that afforded by the polypropylene/heteropolymer blend, but greater than that of polypropylene alone. In the case of Sample 4b, the OTR value is little changed from that of the polypropylene/heteropolymer blend, but this embodiment has the advantage of being readily heat sealable.

## EXAMPLE 5

Example 4 was repeated except that the heteropolymer employed in the core layer was a 6% ethylene copolymer with propylene (Fina Z9470). In this example, the films were cast at 1m/min (3.3 fpm) on a casting roll maintained at 99°C. Films were drawn 6X by 6X.

Properties measured for these films are recorded in Table 5.

TABLE 5

| Sample No. | Gauge | Modulus | % Haze | OTR |
|---|---|---|---|---|
| 5a | 65 | 372,455 | 0.71 | 187.5 |
| 5b | 74 | 281,200 | 0.82 | 217.0 |
| 5c | 75 | 303,650 | 1.78 | 207.7 |

Here again, the control over the OTR of a film that results from the presence of a polypropylene skin or skins is readily seen.

The following examples demonstrate the preparation of thicker composite films according to the invention. These films, due to their thickness, exhibit lower OTR values than do those of Examples 1 through 5. This makes them less suitable for modified atmosphere packaging, but they are suitable for other polypropylene packaging film applications where higher OTR is not necessary or desired.

## EXAMPLE 6

A three layer composite film was cast on a pilot scale tenter film line fitted with a three layer composite die. This 1143 µm 5 mil) cast film consisted of a core layer comprised of a 25/75 blend of nucleated high modulus polypropylene (Aristech FFO35C from Aristech Chemical Co. Pittsburgh, PA) and an ethylene--propylene copolymer containing about 4.5% ethylene. On one of its surfaces it carried a skin layer of the same ethylene--propylene copolymer containing 0.1% of a high molecular weight aliphatic acid amide slip agent (Crodamide BR from Croda, Inc). On the other surface, it carried a skin layer of the same ethylene--propylene copolymer containing 0.2% of a cross-linked polydimethylsiloxane antiblocking agent (Tospearl T-120 from Sumitomo Chemical Corp.). This layer can also serve as a heat seal layer.

The three layer cast film was drawn 6X in the machine direction at 110°C and 8.6X in the transverse direction at 152°C using tenter equipment. A film of 25.4 µm (100 gauge (1 mil)) thickness was recovered. This film consisted of a 24.50 µm (96 gauge) core with a 5.08 µm (2 gauge) skin on each of its surfaces.

Physical properties were measured for this film with the results recorded in Table 6, below. In addition to the measurements recorded in Table 6, this film was also tested for its heat sealability. The sealability was found to meet commercial requirements.

## EXAMPLE 7

A second, thicker, composite film was prepared using the same polymers and copolymers as were used in Example 6. This cast film was drawn 6X in the machine direction at 110°C and 9. 5X at 151 ° C in the transverse direction. The core layer of the drawn film was 29.46 µm (116 gauge) and the skins were each 5.08 µm (2 guage).

Physical properties measured for this film are recorded in Table 6, below.

## EXAMPLE 8

Another 3 layer film was prepared in the same manner as the film prepared in Example 6. This film consisted of a core layer comprising a 50/50 blend of high modulus polypropylene (Aristech FF 03 SC) and a copolymer of ethylene and propylene containing 6% ethylene by weight. The cast film was drawn 6X in the machine direction at 110°C and 9.4X in the transverse direction at 153 °C. The core layer of the drawn film was 24.38 µm (96 gauge) and the skin layers were each 5.06 µm (2 gauge).

Physical properties of this film are recorded in Table 6, below.

## EXAMPLE 9

Another 3 layer film was prepared in the same manner as the film prepared in Example 6. This film was identical to that of Example 6 except that the core layer contained as the high modulus component Accpro 9117 (Amoco Polymers, Aipharetta, GA) The cast film was drawn 6X in the machine direction at 110°C and 10.2X in the transverse direction at 151 °C. The core layer of the drawn film was 24.38 µm (96 gauge) and the skin layers were each 5.08 µm (2 gauge).

Physical properties measured for this film are recorded in Table 6, below.

TABLE 6

| Example No | TD Modulus | MD Modulus | OTR | % Haze |
|---|---|---|---|---|
| 6 | 323961 | 196403 | 183 | 2.8 |
| 7 | 332352 | 207604 | 150 | 2.3 |
| 8 | 433468 | 224767 | 149.5 | 4.6 |
| 9 | 476704 | 251590 | 126.2 | 0.96 |

The film of Example 6 has OTR suitable for use in many modified atmosphere packaging applications. The films of Examples 7, 8 and 9 would have very limited use in modified atmosphere packaging. This is due to their greater than normal thickness, which causes their OTR to be too low for this application. However, each of these films can be used in any other application where a polyolefin film of greater than normal thickness is required.

## Claims

1. A transparent biaxially oriented polyolefin film comprising a core layer carrying a skin layer on one or both of its surfaces, said core layer comprising a polyolefin blend which comprises from 25 to 90% by weight of an ethylene/propylene copolymer having between 4.5 and 6% by weight ethylene and from 75 to 10% by weight of a high modulus polypropylene which, when formed into a 17.78 µm thick (70 gauge), biaxially oriented film drawn 7X by 7X on simultaneous draw equipment has a modulus of at least 3102.4 MPa (450,000 psi).

2. A film according to Claim 1, having a thickness of about 40 to 80 gauge, a tensile modulus of at least about 1240.9 MPa (180,000 psi), an oxygen transmission rate of at least 3.06 cm$^3$/cm$^2$/day/MPa (200 cc/100 sq.in/day/atmosphere) and a moisture vapour transmission rate of at least 0.077 g/cm$^2$/day (0.5 gram/sq.in/day).

3. A film according to Claim 2 or 3, wherein the polyolefin blend in the layer comprises about 40 to 90% by weight of propylene/ethylene copolymer and 60 to 10% by weight of the polypropylene.

## Patentansprüche

1. Transparenter, biaxial orientierter Polyolefinfilm mit einer Kernschicht, die an einer oder an beiden Oberflächen eine Hautschicht aufweist, wobei die Kernschicht ein Polyolefingemisch enthält, in dem 25 bis 90 Gew.% eines Ethylen-Propylen-Copolymers mit 4,5 bis 6 Gew% Ethylen und 75 bis 10 Gew% eines Polypropylens mit einem hohen Modul enthalten ist, das, wenn es in Form eines 17,78 μm dicken (70 gauge), biaxial orientierten Films ausgebildet wird, der auf einer Simultanziehvorrichtung 7x mal 7x gereckt worden ist, einen Modul von mindestens 3102,4 MPa (450,000 psi) hat.

2. Film nach Anspruch 1 mit einer Dicke von etwa 40 bis 80 gauge, einem Elastizitätsmodul von mindestens etwa 1240,9 MPa (180,000 psi), einem Sauerstoffdurchlässigkeitsgrad von mindestens 3,06 cm$^3$/cm$^2$/Tag/MPa (200 cm$^3$/100 sq.in/Tag/Atmosphäre) und einem Feuchtigkeitsdampfdurchlässigkeitsgrad von mindestens 0,077 g/cm$^2$/Tag (0,5 Gramm/sq.in/Tag).

3. Film nach Anspruch 2 oder 3, worin das Polyolefingemisch in der Schicht etwa 40 bis 90 Gew% Propylen-Ethylen-Copolymer und 60 bis 10 Gew% Polypropylen enthält.

## Revendications

1. Film de polyoléfine transparent à orientation biaxiale comprenant une couche centrale portant une couche superficielle sur l'une de ses surfaces ou sur les deux, ladite couche centrale comprenant un mélange de polyoléfine qui contient de 25 à 90 % en poids d'un copolymère d'éthylène-propylène contenant de 4,5 à 6 % en poids d'éthylène et de 75 à 10 % en poids d'un polypropylène à module élevé dans lequel, lorsqu'il est formé de manière à présenter une épaisseur de 17,78 μm (70 Gauge), le film à orientation biaxiale étiré sur 7X par 7X sur un équipement d'étirage simultané a un module d'au moins 3102,4 MPa (450 000 psi).

2. Film selon la revendication 1, ayant une épaisseur de 40 à 80 Gauge environ, un module d'élasticité à la traction d'au moins 1240,9 MPa (180 000 psi) environ, un taux de transmission de l'oxygène d'au moins 3,06 cm$^3$/cm$^2$/jour/MPa (200 cc/100 pouces$^2$/jour/atmosphère), et un taux de transmission de la vapeur d'eau d'au moins 0,077 g/cm$^2$/jour (0,5 gramme/pouces$^2$/jour).

3. Film selon la revendication 2 ou 3, dans lequel le mélange de polyoléfine dans la couche contient de 40 à 90 % en poids environ d'un copolymère d'éthylène-propylène et de 60 à 10 % en poids du polypropylène.